(19) Europäisches Patentamt European Patent Office Office européen des brevets

(11) **EP 4 122 619 B1**

(12) **EUROPEAN PATENT SPECIFICATION**

(45) Date of publication and mention of the grant of the patent:
**07.08.2024 Bulletin 2024/32**

(21) Application number: **21187386.4**

(22) Date of filing: **23.07.2021**

(51) International Patent Classification (IPC):
**B21D 37/16** *(2006.01)*    **G01K 7/00** *(2006.01)*
**G01K 1/14** *(2021.01)*    **G01K 7/02** *(2021.01)*
**B21C 51/00** *(2006.01)*    **B21D 22/02** *(2006.01)*
**B21D 22/20** *(2006.01)*    **B21D 26/027** *(2011.01)*
**B21D 26/041** *(2011.01)*    **B21J 17/02** *(2006.01)*

(52) Cooperative Patent Classification (CPC):
**B21D 37/16; B21C 51/00; G01K 1/14; G01K 7/02;**
B21D 22/022; B21D 22/208; B21D 26/027;
B21D 26/041

(54) **FORMING TOOL AND METHOD FOR TEMPERATURE-CONTROLLED FORMING OF A WORKPIECE**

FORMWERKZEUG UND VERFAHREN ZUR TEMPERATURGESTEUERTEN FORMUNG EINES WERKSTÜCKS

OUTIL DE FORMAGE ET PROCÉDÉ DE FORMAGE À TEMPÉRATURE CONTRÔLÉE D'UNE PIÈCE À USINER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2023 Bulletin 2023/04**

(73) Proprietor: **Technische Universität München 80333 München (DE)**

(72) Inventors:
- **Tröber, Philipp**
  **85301 Schweitenkirchen (DE)**
- **Welm, Markus**
  **85748 Garching (DE)**
- **Demmel, Peter**
  **82549 Königsdorf (DE)**

(74) Representative: **Lucke, Andreas Boehmert & Boehmert Anwaltspartnerschaft mbB Pettenkoferstrasse 22 80336 München (DE)**

(56) References cited:
**EP-A1- 3 081 317**    **US-A1- 2017 182 538**
**US-B2- 8 230 713**

- **WELM MARKUS ET AL: "Thermoelectrically Based Approaches to Reduce Adhesive Wear During Blanking", JOM: JOURNAL OF METALS, SPRINGER NEW YORK LLC, UNITED STATES, vol. 72, no. 7, 11 May 2020 (2020-05-11), pages 2525 - 2535, XP037172148, ISSN: 1047-4838, [retrieved on 20200511], DOI: 10.1007/S11837-020-04191-8**

EP 4 122 619 B1

**Description**

FIELD OF THE INVENTION

The present invention is in the field of industrial material processing, in particular in the field of metalworking. The invention refers to a forming tool for forming a workpiece while allowing monitoring the temperature of the workpiece and to a related method of measuring a temperature of a workpiece being formed in a forming tool.

BACKGROUND OF THE INVENTION

Forming processes are of widespread use in the industry and their relevance tends to increase presently due to their suitability for the mass production of workpieces, in particular metallic workpieces such as plates, tubes or profiles, in a cost-efficient manner, for example of steel, titanium, magnesium or aluminium. Some of the most extended techniques for forming a workpiece include forging, deep drawing, hot stamping, and rolling.

A forming process can take place at room temperature (cold forming) or with the workpiece being heated to a work temperature and/or maintained at said work temperature (hot forming), which work temperature is typically higher than the recrystallization temperature of the workpiece material, for example in a range between 600°C and 980°C. Further, a forming process can include process phases in which the workpiece is cooled down in order to modify the microstructure of the workpiece material.

For example, in the hot stamping technique, which is of widespread use in the automobile industry, steel plates are first heated to a temperature beyond the austenitization temperature of the workpiece material, typically to a temperature of about 950°C, and then formed in a forming tool while simultaneously cooling down (quenching) the workpiece to a temperature around 200°C in order to create a martensitic microstructure.

In the context of such forming processes in which the temperature of the workpiece being formed must follow a controlled predetermined temperature profile, it is important to reliably monitor the actual temperature of the workpiece in real time in order to guarantee a high workpiece quality and the desired material properties of the workpiece.

However, a number of technical challenges are faced when trying to reliably monitor and/or control the temperature of a workpiece that is being formed in a forming tool, for example a forming tool mounted in a forming press or the like.

One of the involved technical difficulties is a consequence of the fact that most forming tools completely surround the workpiece being formed, thereby limiting the accessibility to the workpiece for measuring the temperature thereof. Further, the workpiece is exposed to extreme conditions in the interior of the forming tool due to the high forces, high pressures, high temperatures and the possible presence of impurities, such as lubricant. This poses very strict requirements to the sensor equipment to be used for measuring the temperature of the workpiece in terms of robustness and operability range.

A number of techniques have been developed for measuring the temperature of a workpiece being formed in a forming tool. These include the use of contact thermometers that must be in direct contact with the workpiece, radiation thermometers configured for measuring the thermal radiation emitted by the workpiece, and techniques based on an analysis of a micrograph and/or a material probe of the processed workpiece in order to deduce from it the temperatures it has undergone. However, none of these techniques is fully satisfying. Such techniques are known from US 8 230 713 B2 and US 2017/182538 A1.

The techniques based on analysing the formed workpiece once it has been processed in the forming tool, be it based on a micrograph or on a material probe of the workpiece, cannot be used for monitoring temperatures in real time in order to control the forming process itself, since they can only be used for obtaining information about the workpiece once extracted from the forming tool (i.e. after forming of the workpiece).

The techniques relying on measuring the thermal radiation emitted by the workpiece while it is being formed in the forming tool require a sufficient free surface of the workpiece to be exposed by the forming tool and hence have limited applicability.

Likewise, the techniques relying on directly measuring the temperature of the workpiece by using a thermometer require a thermometer to be arranged in direct contact with the workpiece in order to deliver reliable results and hence have a limited applicability due to the reduced or simply non-existent accessibility of the workpiece through the forming tool. Alternative solutions in which the thermometer or thermal sensor is embedded within the forming tool can only offer limited reliability, since the accuracy of the temperature measurement diminishes with increasing distance to the workpiece, for example due to thermal dissipation and to the corresponding time offset.

Thin-layer thermal sensors have been recently developed, which are configured for being deposited on a surface, the temperature of which is to be measured, for example at the interface between a workpiece to be cut and a cutting tool in which the workpiece is being processed. Such sensors can have a thickness in the lower $\mu$m-range. However, these sensors have limited applicability in real industrial forming processes, since in practice they cannot withstand the high pressures and temperatures to which the workpiece is subjected in many forming processes and hence deteriorate very rapidly. Further, the use of such sensors can have a negative effect on the tribology of the tool.

In view of the above, it is presently difficult to obtain reliable measurements of the temperature of a workpiece while the workpiece is being formed in a forming tool. Thus, there is room for technical improvement in the field of industrial material processing in terms of measuring and monitoring the temperature of the workpiece while the workpiece is being formed in a forming tool.

SUMMARY OF THE INVENTION

The present invention aims at providing a forming tool and a method allowing to reliably and accurately measure the temperature of a workpiece being formed in a forming tool, in particular in real time, with improved precision and avoiding the technical disadvantages of the known solutions referred to above. This technical aim is achieved by a forming tool according to claim 1 and by a method of measuring a temperature of a workpiece according to claim 11.

A first aspect of the invention refers to a forming tool for forming a workpiece. "Forming" or "forming process" as used herein may refer in general to a technique used for providing a workpiece, such as a metallic plate or a metallic tube, with a predefined target form by applying a deforming pressure upon the workpiece with the forming tool.

The forming tool comprises a first tool member and a second tool member for forming a workpiece arranged therebetween (between the first tool member and the second tool member) by pressing against a workpiece with a respective pressing surface. Thus, the workpiece may be arranged between the first and second tool members, in particular between the pressing surface of the first tool member and the pressing surface of the second tool member.

The first and second tool members are configured for forming the workpiece by applying pressure to the workpiece by means of the respective pressing surface. The pressure applied by the first and second tool members to the workpiece may be an actively applied pressure (a dynamic pressure), for example due to the first tool member and the second tool member moving with respect to each other, in particular closer to each other, thereby pressing the workpiece, as for example within the context of a hot stamping process or a forging process. However, the pressure applied by the first and second tool members to the workpiece may also be a passively applied pressure (a static pressure), for example due to the workpiece being pressed against the first and second tool members by a further tool member or by an actuating pressure, such as an hydraulic fluid pressure, compressed air, vacuum or the like, as for example within the context of a hydroforming process. In either case, the workpiece arranged between the first and second tool members is forced to take up a shape or contour defined by the first and second tool members, in particular a shape defined by the respective pressing surfaces of the first and second tool members.

As an illustrative simplistic example, in order to deform a flat sheet-like workpiece into a C-shaped workpiece, the pressing surface of the first tool member may define a C-shaped concavity while the pressing surface of the second tool member may define a corresponding C-shaped convexity such that, when being pressed against each other, the first and second tool members force the workpiece arranged therebetween to take up a C-shaped profile defined by the C-shaped concavity of the first tool member and by the C-shaped convexity of the second tool member. Notably, this is just an illustrative simplistic example and the shape to be taken by the workpiece and hence also the corresponding profiles/contours of the pressing surfaces of the first and second tool members may be considerably more complex than the exemplary C-shaped profile exemplarily described above.

The first tool member and the second tool member may be movable with respect to each other, in particular along a pressing direction in which the first and second tool members are separated or separable from each other. The first tool member and the second tool member may be unidirectionally movable with respect to each along such pressing direction only, while a relative position of the first tool member and the second tool member may be fixed in other directions perpendicular to said pressing direction. With respect to a reference frame static with respect to the forming tool, the first tool member may be movable while the second tool member may be static, the second tool member may be movable while the first tool member may be static, or both the first and second tool members may be movable. The first and second tool members may for example correspond to the upper tool member (e.g. a ram or die) and the lower tool member (e.g. a further ram, die or a base) of an industrial stamping press, respectively.

"Forming" or "forming process" as used herein may in particular refer to non-extracting or non-material-removing techniques, whereby the workpiece being processed is formed without any material-removal process, i.e. without removing any portions of the original material of the workpiece. Thus, unlike with extractive techniques such as machining or cutting, in which at least a part of the original material is removed, "forming" within the context of the present invention may refer to a process in which only the shape (form) of the workpiece being processed is modified, but not the mass thereof. "Forming" or "forming process" as used herein may hence refer to techniques by which the mass of the workpiece being processed is substantially kept constant, for example techniques such as pressing, stamping, hot stamping, hydroforming or forging.

The forming tool of the present invention further comprises a temperature monitoring system comprising a voltmeter connected between a first electrical contact of the first tool member and a second electrical contact of the second tool member. "Voltmeter" refers herein in general to any device configured for providing a direct or indirect measurement of a voltage between the first and second electrical contacts. The first electrical contact is a portion of the first tool member to which the voltmeter is electrically coupled, for example by means of a corresponding wired connection. The second electrical contact is likewise a portion of the second tool member to which the voltmeter is electrically coupled, for example by means of a corresponding wired connection. The voltmeter may for example be a conventional multimeter configured for directly measuring a voltage between the first electrical contact and the second electrical contact.

A first electrical path is defined in the first tool member between the pressing surface thereof (of the first tool member) and the first electrical contact, and a second electrical path is defined in the second tool member between the pressing surface thereof (of the second tool member) and the second electrical contact. "Electrical path" refers herein to a continuous path through one or more materials, within the corresponding tool member, through which a flow of charge carriers can flow under the effect of an electrical potential.

The first electrical path comprises at least a portion of a first electrically conductive material while the second electrical path comprises at least a portion of a second electrically conductive material, wherein the second electrically conductive material is different from the first electrically conductive material. In other words, at least one of the materials through which the first electrical path extends is different from at least one of the materials through which the second electrical path extends. Each of the first and second electrically conductive materials may be a purely electrically conductive material such as a metallic material, but may also be or comprise a semiconductor material in a conduction state.

The first electrical path is electrically coupled with the second electrical path through the voltmeter that is connected therebetween. Thus, when an electrically conductive workpiece arranged between the first tool member and the second tool member is in electrical contact (i.e. in electrical communication) with the pressing surfaces of the first tool member and of the second tool member, for example when the pressing surfaces of the first tool member and of the second tool member are in direct physical contact with the workpiece, an electrical circuit is formed by the first electrical path, an electrical connection between the first electrical path and the voltmeter, the voltmeter, an electrical connection between the voltmeter and the second electrical path, the second electrical path, and the workpiece (and possibly by further electrically conductive elements arranged between the workpiece and one or both of the first tool member and the second tool member).

Notably, the portion of said electrical circuit extending through the first tool member, i.e. the first electrical path, and the portion of said closed electrical circuit extending through the second tool member, i.e. the second electrical path, have at least in part different material compositions. Thus, when a temperature of the workpiece is different from, for example higher than, a temperature of the first and second electrical contacts, a thermoelectric voltage will arise in the aforementioned electrical circuit as a consequence of the Seebeck effect.

Thus, the first electrical path through the first tool member and the second electrical path through the second tool member effectively form a thermocouple allowing to accurately infer a temperature of the workpiece from a known temperature of the first electrical contact and of the second electrical contact using the forming tool as a measuring instrument, in particular when the workpiece is in thermal contact (i.e. in thermal communication) with the first tool member and with the second tool member, for example when the workpiece is in direct physical contact with the pressing surface of the first tool member and/or with the pressing surface of the second tool member.

The thermoelectrically generated voltage measured at the voltmeter is only dependent on the different Seebeck coefficients of the first and second electrical paths and can be correlated with a temperature difference between the temperature of the pressing surfaces of the first and second tool members (the closed interface of the thermocouple), and the temperature of the first and second electrical contacts (of the open interface of the thermocouple). This may be achieved by means of a calibration method that will be described in further detail below, which may involve experimentally determining the Seebeck coefficient of each of the first electrical path and the second electrical path. Notably, the Seebeck coefficients to be determined can be temperature-dependent functions.

The temperature at the first electrical contact and the temperature at the second electrical contact, which may be the same temperature, can be easily measured using conventional temperature measuring means, in particular since the first electrical contact and the second electrical contact can be arranged in or on the respective tool member such that they are easily accessible from the exterior of the forming tool, in particular as compared to the accessibility to the workpiece being formed.

If the workpiece being formed in the forming tool has been heated to a given process temperature, for example using heating elements or the like, for instance during a warm forming process or a hot forming process, and has reached thermal equilibrium, there is no temperature gradient left within the workpiece, for which no additional thermal electricity is generated in the workpiece. Consequently, the workpiece does not affect the measurement of its temperature using a thermocouple formed by the first tool member and the second tool member. Further, if the workpiece is in physical contact with the first tool member and with the second tool member by the respective pressing surface, it is guaranteed that, in the aforementioned situation of thermal equilibrium, a temperature at the pressing surface of the first tool member and a temperature at the pressing surface of the second tool member are the same and they are equal to a temperature measurable throughout the workpiece.

Consequently, the forming tool according to the invention allows reliably measuring and monitoring the temperature of an electrically conductive workpiece being formed in the forming tool in real time avoiding the technical disadvantages of the background art mentioned above and in a manner independent from a material composition of the workpiece itself, i.e. for any type of conductive workpiece irrespectively of a material composition thereof, and irrespectively of the particular forming technique being used. In particular, the forming tool according to the invention is also suitable for reliably measuring and monitoring in real-time the temperature of an electrically conductive workpiece being processed during a warm forming process or a hot forming process, for example being hot worked, i.e. being formed at a temperature above a recrystallization temperature of a material of the workpiece.

Notably, the workpiece being formed needs not be completely made of a conductive material. Instead, it is sufficient for the purposes of the invention that the workpiece allows a flow of charge carriers to flow therethrough between the first electrical path and the second electrical path.

Other than in previously known solutions for measuring the temperature of the workpiece being formed in a forming tool, according to the invention, the forming tool itself is used as a temperature measuring device.

In preferred embodiments of the invention, the first electrical contact may be arranged at/on an external surface of the first tool member. Additionally or alternatively, the second electrical contact may be arranged at/on an external surface of the second tool member. Thus, the first electrical path and/or the second electrical path may extend up to the external surface of the corresponding tool member, between the pressing surface and an external surface of the corresponding tool member. As a consequence, the temperature of the first electrical contact and the temperature of the second electrical contact may correspond to an external temperature of the first tool member and of the second tool member, respectively, and may in particular be the same temperature. This further simplifies the task of accessing the first electrical contact and/or the second electrical contact in order to measure a temperature thereof as a reference temperature for inferring the temperature of the workpiece from the voltage measured by the voltmeter.

In preferred embodiments of the invention, said at least a portion of the first electrical path may be arranged at/on an external surface of the first tool member, possibly at an external surface of the first tool member on which the first electrical contact may be arranged. Additionally or alternatively, said at least a portion of the second electrical path may be arranged at/on an external surface of the second tool member, possibly at an external surface of the second tool member on which the second electrical contact may be arranged. Thus, the portion of the first electrical path made of the first electrically conductive material and/or the portion of the second electrical path made of the second electrically conductive material may extend up to the external surface of the corresponding tool member.

According to some preferred embodiments, said at least a portion of the first electrical path may be a first coating coated at/on an external surface of the first tool member. Additionally or alternatively, said at least a portion of the second electrical path may be a second coating coated at/on an external surface of the second tool member. Thus, any pre-existing forming tool having first and second tool members allowing an electric current to flow therethrough, possibly made of the same material, can be easily adapted to constitute a forming tool according to the present invention by simply depositing a first coating of the first electrically conductive material on the first tool member and/or a second coating of the second electrically conductive material on the second tool member. Notably, it may be sufficient to deposit a first or second coating on only one of the first and second tool members, respectively. Further, a manufacturing of a forming tool according to the present invention may be simplified by forming said at least a portion of the first electrical path and/or of the second electrical path as corresponding coating(s) on a respective external surface of the first tool member and/or of the second tool member, respectively.

In some preferred embodiments of the invention, said at least a portion of the first electrical path may be arranged at/on the pressing surface of the first tool member. Additionally or alternatively, said at least a portion of the second electrical path may be arranged at/on the pressing surface of the second tool member. Thus, the at least a portion of the first electrical path that is made of the first electrically conductive material and/or the at least a portion of the second electrical path that is made of the second electrically conductive material may extend from the pressing surface of the respective tool member.

For example, the first electrical path may be entirely made of the first electrically conductive material and may continuously extend between the pressing surface of the first tool member and an external surface of the first tool member, in particular an external surface of the first tool member on which the first electrical contact may be arranged. Additionally or alternatively, the second electrical path may be entirely made of the second electrically conductive material and may continuously extend between the pressing surface of the second tool member and an external surface of the second tool member, in particular an external surface of the second tool member on which the second electrical contact may be arranged.

In preferred embodiments of the invention, the first tool member may be made of the first electrically conductive material, in particular entirely made of the first electrically conductive material, and/or the second tool member may be made of the second electrically conductive material, in particular entirely made of the second electrically conductive material. Thus, when manufacturing a forming tool according to the present invention, it may be sufficient to provide the first tool member made of the first electrically conductive material and/or to provide the second tool member made of the second electrically conductive material.

According to some preferred embodiments, the forming tool according to the invention, in particular the temperature monitoring system, may further comprise a temperature measuring device configured for measuring a temperature at the first electrical contact and/or at the second electrical contact. It is also foreseen within the context of the invention to use different temperature measuring devices for measuring a temperature at the first electrical contact and at the second electrical contact, respectively. The temperature measured by the temperature measuring device(s) can be used as reference for inferring the temperature of the workpiece from the voltage measured by the voltmeter, according to the working principle of a thermocouple, in particular based on a calibration process that will be explained in further detail below and/or for the calibration process itself. The temperature measuring device(s) (each) may be or may comprise a conventional thermometer.

In preferred embodiments of the invention, the forming tool, in particular the temperature monitoring system, may further comprise a processing unit configured for determining a temperature at the pressing surface of the first tool member and/or at the pressing surface of the second tool member based on a voltage measurement provided by the voltmeter. The temperature at the pressing surface of the first and second tool members, which may in particular be the same temperature, for example once the workpiece being formed has reached thermal equilibrium and has no temperature gradient therein and may hence correspond to the temperature of the workpiece. The temperature of the workpiece may then be automatically computed by the processing unit from the voltage measurement provided by the voltmeter, in particular based on a measurement of a temperature at the first electrical contact and/or at the second electrical contact, for example provided by the aforementioned temperature measuring device, and further possibly based on a calibration process that will be explained in further detail below.

The forming tool according to the invention may comprise one or more heating elements configured for heating the first tool member and/or the second tool member. The heat provided by the one or more heating elements may be transferred by the first and/or second tool members to the workpiece arranged therebetween and hence used for heating and/or setting a temperature of the workpiece. The one or more heating elements may be or may comprise one or more electrical resistors or the like. Thus, the forming tool of the invention may be used for hot working a workpiece. The one or more heating elements may be configured for heating the first and second tool members in order to heat the workpiece to a predefined temperature and/or to maintain the workpiece at a predefined temperature.

According to some preferred embodiments, the forming tool, in particular the temperature monitoring system, may further comprise a temperature regulation system configured for setting a temperature of the first tool member at the first electrical contact and/or a temperature of the second tool member at the second electrical contact. The temperature regulation system may for example be or may comprise a cooling system, for example a water-cooling system or an air-cooling system and may be used for maintaining and/or regulating a temperature of the first electrical contact and/or of the second electrical contact, in particular in order to set the temperature(s) thereof to a desired reference temperature to be used for computing a temperature at any or both of the pressing surfaces based on the principles of a thermocouple as explained above.

In some preferred embodiments, the forming tool may further comprise one or more insulating elements configured for electrically insulating the first electrical path and/or the second electrical path from the rest of the forming tool. The one or more insulating elements may for example comprise or may be made of a ceramic material. The electrical insulation provided by the one or more insulating elements may prevent or reduce thermal interferences within the forming tool and hence may provide an improved accuracy for determining the temperature of the workpiece being processed according to the principles of the present invention based on the Seebeck effect. For example, in embodiments in which the first tool member and/or the second tool member are made of a corresponding electrically conductive material, a respective insulating element, for instance a ceramic element, may enclose the first tool member and/or the second tool member, respectively, thereby providing electrical insulation (while allowing an electrical connection therethrough corresponding to the first electrical path and/or the second electrical path, respectively).

The forming tool according to the invention may be configured for forming the workpiece by any of pressing, stamping, hot stamping, hydroforming or forging, cold forming, warm forming and/or hot forming.

A second aspect of the invention refers to a method of measuring a temperature of a workpiece being formed in a forming tool. The method, which may be a computer-implemented method, may be implemented by the previously described processing unit of a forming tool according to the first aspect of the invention. The forming tool according to the first aspect of the invention is a possible implementation of the method according to this second aspect of the invention, but not necessarily the only possible implementation.

In the method according to the second aspect of the invention, the workpiece is arranged between a first tool member of the forming tool and a second tool member of the forming tool. The workpiece allows electrical current to flow therethrough. In particular, the workpiece may be made of an electrically conductive material. For example, the workpiece may be a metallic workpiece made of a metal material or of a metal alloy.

The workpiece is arranged in thermal and electrical contact (i.e. in thermal and electrical communication) with the first tool member and with the second tool member. In particular, the workpiece may be arranged in direct physical contact with the first tool member and/or with the second tool member while being formed. With reference to the description of the first aspect of the invention, the workpiece may be in thermal and electrical contact, possibly in direct physical contact, with a pressing surface of the first tool member and/or with a pressing surface of the second tool member. "Thermal contact" may refer herein in particular to a thermal communication allowing thermal energy to pass and "electrical contact" may refer in particular to an electrical communication allowing an electrical potential and/or a corresponding electrical current to pass.

The method according to the second aspect of the invention comprises measuring a temperature of the workpiece being formed based on a voltage measurement corresponding to a voltage thermoelectrically induced between the first tool member and the second tool member through the workpiece, which may be associated with a thermoelectric current flowing through each of the first tool member, the workpiece and the second tool member, in particular between the first and second electrical contacts described above. The physical principle underlying the method according to the second aspect of the invention is the same as described above for the first aspect of the invention: the forming tool is used as a thermocouple for determining the temperature of the workpiece being formed based on the Seebeck effect. The aforesaid thermoelectrically induced voltage is in particular thermoelectrically induced between the first tool member and the second tool member through the workpiece due to a temperature of the workpiece being different from, for example higher than, a temperature of the first and second electrical contacts, as a consequence of the Seebeck effect. The voltage measurement corresponding to said thermoelectrically induced voltage may be a direct measurement of said thermoelectrically induced voltage, but may also be an indirect measurement of another voltage or parameter, from which the corresponding thermoelectrically induced voltage may be inferred.

More specifically, said thermoelectric current may flow through a first electrical path defined in the first tool member and through a second electrical path defined in the second tool member (and through the workpiece therebetween), wherein the first electrical path has a first Seebeck coefficient and the second electrical path has a second Seebeck coefficient different from the first Seebeck coefficient. Thus, the corresponding voltage measured for inferring the temperature of the workpiece may be or correspond to a thermoelectric voltage induced between first electrical path (in particular a first electrical contact thereof) and the second electrical path (in particular a second electrical contact thereof) via the workpiece. Notably, the Seebeck coefficients to be determined can be temperature-dependent functions. The different Seebeck coefficients of the first electrical path and of the second electrical path may be due to at least a portion of the first electrical path comprising a different material than at least a portion of the second electrical path.

Preferably, the method may comprise, before the temperature of the workpiece is measured, a calibration process comprising determining the first Seebeck coefficient (i.e. a Seebeck coefficient of the first electrical path) and/or the second Seebeck coefficient (i.e. a Seebeck coefficient of the second electrical path).

The aforementioned calibration process may in particular comprise experimentally determining the first Seebeck coefficient and the second Seebeck coefficient, possibly by comparing the thermoelectric behaviour of the first electrical path and/or of the second electrical path to the thermoelectric behaviour of a reference material, which may in particular be the same reference material for both the first electrical path and the second electrical path. The calibration process may comprise determining a relationship (a functional dependence) between a voltage measured by the voltmeter and a temperature of the respective pressing surface, which equals a temperature of the workpiece once a thermal equilibrium is reached.

For the calibration, it is possible to use a material with a known Seebeck coefficient $S_{ref}$ as a reference material, wherein the reference material is arranged in electrical contact with both ends of the (first and/or second) electrical path to be tested. One of the ends of the (first and/or second) electrical path to be calibrated, i.e. one of the electrical interfaces reference-specimen, is kept at a constant reference temperature $T_{ref}$, while the other end of the (first and/or second) electrical path to be calibrated, i.e. the other one of the electrical interfaces reference-specimen, is continuously heated up to a test temperature $T_h$. A temperature gradient is formed within the specimen, i.e. within the first and/or second electrical path being calibrated, which results in a thermal diffusion, i.e. to a net flow of charge carriers due to differing internal kinetic energies. This in turn results in the creation of an electrical voltage, which can be measured with a voltmeter. By correlating simultaneous values of the reference temperature $T_{ref}$ with corresponding values of the test temperature $T_h$, it is possible to determine the precise temperature difference (the difference between $T_{ref}$ and $T_h$) corresponding to a particular measured voltage $V_{th}$, in particular based on the formula:

$$V_{th}(T) = \big(S(T) - S_{ref}(T)\big)\big(T_h - T_{ref}\big)$$

A differentiation of the above formula allows obtaining the Seebeck coefficient of the (first and/or second) electrical path being calibrated *S(T)*. Notably, when the first electrical path and the second electrical path are calibrated using the same reference material, it is irrelevant what Seebeck coefficient such reference material has, for it can be cancelled out in the relevant equations.

According to preferred embodiments, in the method according to the second aspect of the invention, the workpiece may be a workpiece being formed while heating the workpiece and/or while maintaining the workpiece, in particular the entire workpiece, at a predefined working temperature. The predefined working temperature is preferably greater than 350°C, more preferably greater than 500°C, for example from 650°C to 980°C. Thus, the method of the second aspect of the invention may be applied to a workpiece that is being hot worked in the forming tool.

In preferred embodiments, the workpiece may be a workpiece being formed by any of hot forming, cold forming, pressing, stamping, hot stamping, hydroforming or forging.

BRIEF DESCRIPTION OF THE DRAWINGS

Fig. 1-5    show forming tools according to different embodiments of the invention.

Fig. 6      shows a flow diagram illustrating a method according to the invention.

DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

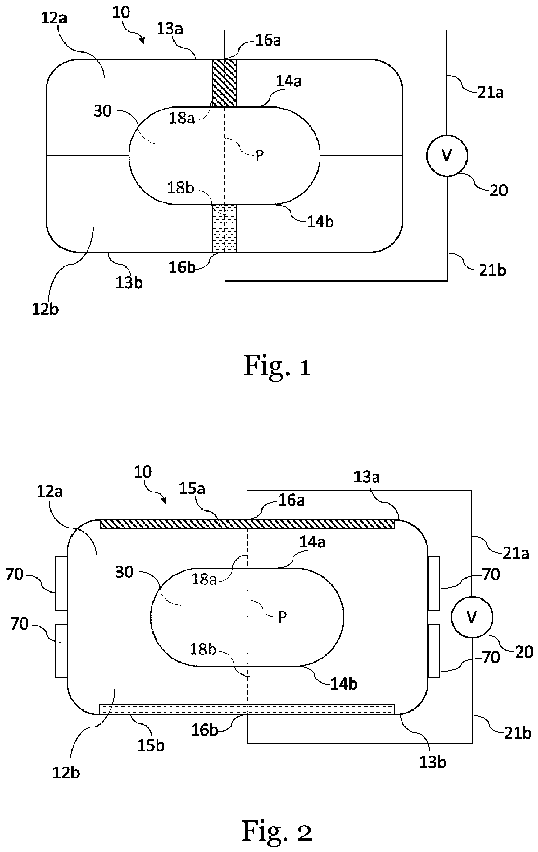

Figs. 1 to 5 illustrate schematic views of forming tools 10 according to different embodiments of the invention. The same reference numerals are used in all figures for designating the same elements.

Figs. 1 to 4 represent embodiments of the invention in which the forming tool 10 is integrated in a forming press configured for pressing a workpiece 30 made of an electrically conducting material, for example a metallic or metal alloy material, wherein the forming tool 10 comprises a first tool member 12a and a second tool member 12b, which are movable with respect to each other in a pressing direction corresponding to the vertical direction of the schematic views represented in Figs. 1 to 4.

The workpiece 30 is arranged between the first tool member 12a and the second tool member 12b, such that each of the first tool member 12a and the second tool member 12b is in direct physical contact with the workpiece 30 by a corresponding pressing surface 14a and 14b, respectively. When moving towards each other, the first and second tool members 12a, 12b apply a forming pressure upon the workpiece 30 by the corresponding pressing surfaces 14a, 14b forcing the workpiece 30 to take up a shape defined by the pressing surfaces 14a, 14b. In the exemplary embodiments shown in Figs. 1 to 4, the workpiece 30 takes up an oval shape in the cross-section shown.

The forming tool 10 further comprises a temperature monitoring system, which comprises a voltmeter 20 that is electrically connected to a first electrical contact 16a of the first tool member 12a by means of a first electrical connection 21a and to a second electrical contact 16b of the second tool member 12b by means of a second electrical connection 21b. Thus, the voltmeter 20 is electrically connected between the first electrical contact 16a and the second electrical contact 16b.

The first tool member 12a comprises, in a portion extending between the pressing surface 14a and the external surface 13a, on which the first electrical contact 16a is arranged, a first electrically conductive material. Thus, a first electrical path 18a formed through the first tool member 12a from the workpiece 30 to the first electrical contact 16a comprises the first electrically conductive material. Charge carriers travelling along the first electrical path 18a through the first tool member 12a flow across the first electrically conductive material.

Likewise, the second tool member 12b defines a second electrical path 18b therethrough allowing charge carriers to flow between the pressing surface 14b and a second electrical contact 16b through the second tool member 12b. The second electrical path 18b comprises at least a portion made of a second electrically conductive material different from the first electrically conductive material.

In the exemplary embodiment illustrated in Fig. 1, the portion of the first electrical path 18a that comprises the first electrically conductive material extends from the pressing surface 14a all the way to the external surface 16a. However, in other related embodiments, the portion of the first electrical path 18a made of the first electrically conductive material may extend from and/or to an intermediate position located halfway between the pressing surface 14a and the external surface 16a. The same applies to the second electrical path 18b, which in other related embodiments may extend from and/or to an intermediate position located halfway between the pressing surface 14b and the external surface 16b.

Since the workpiece 30 is made at least in part of an electrically conductive material, the first electrical path 16a through the first tool member 12a, the first electrical connection 21a, the voltmeter 20, the second electrical connection 21b, the second electrical path 18b through the second tool member 12b and an electrical path P within the workpiece 30 itself define an electrical circuit through which charge carriers, i.e. an electric current, can circulate in the presence of an electrical voltage.

If the workpiece 30 is heated to a given temperature and reaches a thermal equilibrium, such that the temperature within the workpiece 30 is homogeneous (i. e. the workpiece 30 has no internal temperature gradient), a temperature at the pressing surface 14a of the first tool member 12a will be identical to a temperature at the pressing surface 14b of the second tool member 12b and will correspond to the temperature of the workpiece 30. Since both pressing surfaces 14a, 14b are at the same temperature and the electrical path P within the workpiece 30 electrically couples both pressing surfaces 14a, 14b, the workpiece effectively constitutes an interface between the first electrical path 18a, which comprises the first electrically conductive material, and the second electrical path 18b, which comprises the second electrically conductive material different from the first electrically conductive material.

Due to the different material compositions, a Seebeck coefficient of the first electrical path 18a is different from a Seebeck coefficient of the second electrical path 18b. In the exemplary embodiment shown in Fig. 1, in which the first electrically conductive material covers the entire extension of the first electrical path 18a through the first tool member 12a and the second electrically conductive material covers the entire extension of the second electrical path 18b through the second tool member 12b, the different Seebeck coefficients will correspond to the Seebeck coefficients of the first and second electrically conductive materials, respectively.

However, in other related embodiments of the invention, the first electrical path 18a can comprise portions made of other materials different from the first electrically conductive material and the Seebeck coefficient of the first electrical path 18a needs not identically correspond to the Seebeck coefficient of the first electrically conductive material. Likewise, the second electrical path 18b can comprise portions made of other materials different from the second electrically conductive material and the Seebeck coefficient of the second electrical path 18b needs not identically correspond to the Seebeck coefficient of the second electrically conductive material.

When a temperature of the workpiece 30 is different from (for example higher than) a temperature at the external surfaces 13a, 13b of the first and second tool members 12a, 12b, at/on which the first and second electrical contact 16a, 16b are respectively located, the Seebeck effect will manifest as a thermoelectrically induced voltage difference between the second electrical contact 16b and the first electrical contact 16a, which will cause a corresponding thermoelectric current to flow through the second electrical path 18b, the electrical path P through the workpiece 30 and through the first electrical path 16a. The aforesaid voltage difference between the first electrical contact 16a and the second electrical contact 16b will be measurable by the voltmeter 20. Such voltage difference correlates with the Seebeck coefficient of the first electrical path 18a, the Seebeck coefficient of the second electrical path 18b and with a temperature difference between the workpiece and the first electrical contact 16a and/or the second electrical contact 16b, wherein a temperature at the first electrical contact 16a can be the same as a temperature at the second electrical contact 16b.

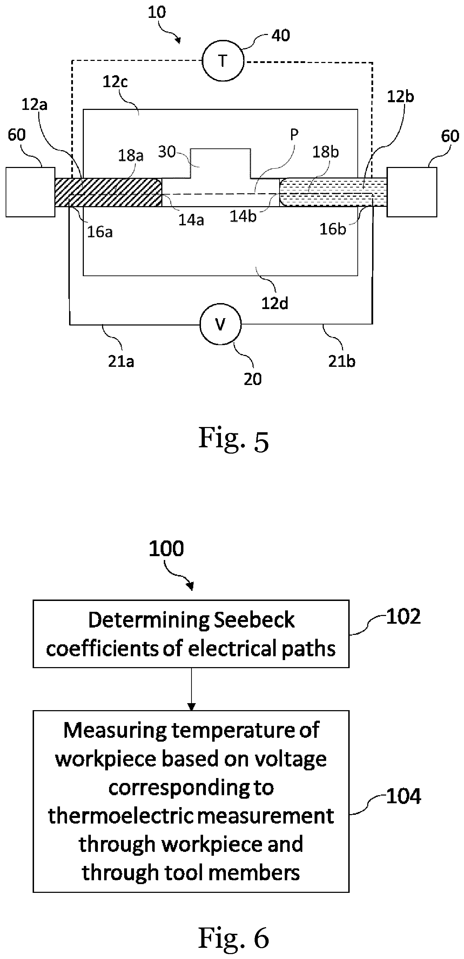

The Seebeck coefficients of the first electrical path 18a and of the second electrical path 18b can be experimentally determined as explained above with the aid of a reference material, possibly during a calibration phase. Further, the temperature at the first electrical contact 16a and at the second electrical contact 16b can be easily monitored due to the open accessibility thereof, in particular in embodiments like the embodiments shown, in which the first electrical contact 16a and the second electrical contact 16b are arranged on a respective external surface 13a, 13b of the respective tool member 12a, 12b, for example using a conventional contact thermometer (not shown, cf. temperature measuring device 40 in Fig. 5). Thereby, it is possible to use the voltage measured by the voltmeter 20 to infer in real-time and with high accuracy the temperature of the workpiece 30 being formed in the forming tool 10.

Fig. 2 shows a schematic view of a forming tool 10 according to a related embodiment in which the portion of the first electrical path 18a is made of the first electrically conductive material which is configured as a first coating 15a arranged at/on the external surface 13a of the first tool member 12a. A material composition and/or structure of the first tool member 12a is then such as to allow an electrical current to flow therethrough, in particular through the pressing surface 14a and the first coating 15a. Further, the portion of the second electrical path 18b made of the second electrically conductive material is configured as a second coating 15b arranged at/on the external surface 13b of the second tool member 12b. A material composition and/or structure of the second tool member 12b is such as to allow an electrical current to flow therethrough, in particular through the pressing surface 14b and the second coating 15b. Notably, in other embodiments the forming tool 10 can comprise only one of the coatings 15a and 15b as long as electric current is allowed to flow also through the non-coated tool member.

Also shown in the exemplary embodiment illustrated in Fig. 2 is a plurality of heating members 70 that are arranged at/on the first tool member 12a and at/on the second tool member 12b, and which are configured for heating the respective tool member 12a, 12b, to thereby heat the workpiece 30 in order to set a temperature thereof in a controlled manner.

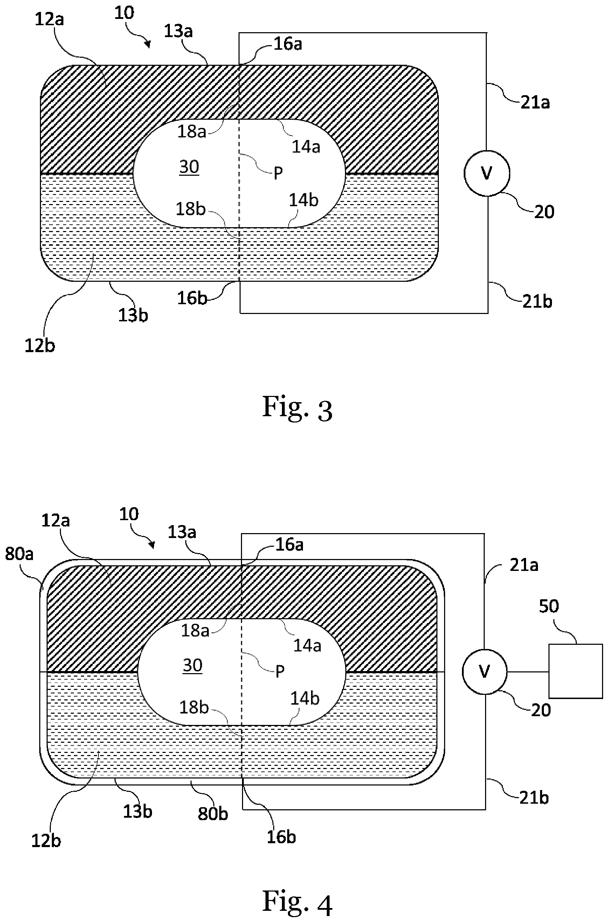

Figs. 3 and 4 show related exemplary embodiments in which the first tool member 12a is entirely made of a first electrically conductive material while the second tool member 12b is entirely made of a second electrically conductive material different from the first electrically conductive material. As a consequence, the first electrical path 18a will have a first Seebeck coefficient corresponding to the Seebeck coefficient of the first electrically conductive material. Likewise, the second electrical path 18b will have a second Seebeck coefficient (different from the first Seebeck coefficient) corresponding to the Seebeck coefficient of the second electrically conductive material.

The exemplary embodiment shown in Fig. 4 comprises all elements of the exemplary embodiment shown in Fig. 3 but differs therefrom by further including a first insulating element 80a, a second insulating element 80b, and a processing unit 50. The first and second insulating elements 80a, 80b, which can for example be ceramic elements, provide electrical insulation to the first and second electrical paths 18a, 18b, respectively, in this exemplary case by enclosing the first tool member 12a and the second tool member 12b, respectively, thereby electrically insulating the first and second electrical path 18a, 18b from the rest of the forming tool 10. The processing unit 50 is functionally connected to the voltmeter 20 and configured for (e.g. programmed for) receiving a voltage value measured by the voltmeter 20 and for automatically providing, based thereon and possibly based on a previous calibration process as described above, a corresponding value of the temperature at the pressing surfaces 14a, 14b, i.e. a temperature of the workpiece 30.

Notably, while the exemplary embodiments discussed with respective Figs. 1 to 4, are all embodiments in which a configuration of the first electrical path 18a through the first tool member 12a is equal to a configuration of the second electrical path 18b through the second tool member 12b (i.e. the forming tool 10 is "symmetric" in these regards), the present invention also foresees "asymmetric" embodiments in which a configuration of the first electrical path 18a through the first tool member 12a may be different from a configuration of the second electrical path 18b through the second tool member 12b: for example, a portion of the first electrically conductive material embedded in the first tool member 12a as shown in Fig. 1 or a coating 15a of the first electrically conductive material formed on the first tool member 12a as shown in Fig. 2 may be combined with a second tool member 12b entirely made of the second electrically conductive material as shown in Figs. 3 and 4.

Fig. 5 represents an embodiment of the invention in which the forming tool 10 is a hydroforming tool configured for forming a workpiece 30 made of an electrically conducting material, for example a metallic or metal alloy material, by hydroforming, wherein the forming tool 10 comprises a first tool member 12a and a second tool member 12b, which are movable with respect to each other in a pressing direction corresponding to the horizontal direction of the schematic view represented in Fig. 5. In this embodiment, the forming tool 10 further comprises a third tool member 12c and a fourth tool member 12d, which are movable with respect to each other in a pressing direction corresponding to the vertical direction of the schematic view represented in Fig. 5.

Each of the first tool member 12a and the second tool member 12b may have a fluid channel defined therein allowing a pressure fluid to flow therethrough during operation of the forming tool 10.

In the embodiment represented in Fig. 5, the first tool member 12a is entirely made of a first electrically conductive material while the second tool member 12b is entirely made of a second electrically conductive material that is different from the first electrically conductive material. The underlying principle in which the measuring of the temperature of the workpiece 30 is based is analogous to the principle explained above with reference to exemplary embodiments illustrated in Figs. 1 to 4: the first electrical path 18a through the first tool member 12a, the electrical path P within the workpiece 30, and the second electrical path 18b through the second tool member 12b allow a thermocurrent due to a temperature difference between the workpiece 30 and the first and second electrical contacts 16a, 16b to flow through the forming tool 10 (through the first and second tool members 12a, 12b) and through the workpiece 30 during operation, such that a voltage measured by the voltmeter 20 is a thermovoltage that can be correlated with the temperature of the workpiece 30.

The forming tool 10 shown in Fig. 5 further comprises a temperature regulation unit 60 configured for setting a temperature of the first tool member 12a at the first electrical contact 16a and a temperature of the second tool member 12b at the second electrical contact 16b. For example, the temperature regulation unit 60 may comprise a water-based cooling system configured for setting the temperature of the first tool member 12a at the first electrical contact 16a and the temperature of the second tool member 12b at the second electrical contact 16b equal to a predefined temperature, which can be used as a reference temperature for inferring the temperature of the workpiece 30 from a voltage measured by the voltmeter 20. The temperature of the first tool member 12a at the first electrical contact 16a and the temperature of the second tool member 12b at the second electrical contact 16b can be measured in real time and monitored by means of a temperature measuring device 40, which can for example comprise a contact thermometer or a pair thereof (one for each of the first and second electrical contacts 16a, 16b).

Fig. 6 is a schematic flow diagram illustrating a method 100 of measuring a temperature of a workpiece being formed in a forming tool, for example in the forming tool 10 discussed above with reference to the exemplary embodiments illustrated in any of Figs. 1 to 5. In particular, the processing unit 50 of a forming tool 10 according to the invention (cf. Fig. 4) can be configured for implementing the method 100.

In step 102, the Seebeck coefficient of the first electrical path 18a and the Seebeck coefficient of the second electrical path 18b are determined as part of a calibration process, for example in the manner explained above. For example, if the first tool member 12a is entirely made of a first electrically conductive material and/or if the second tool member 12b is entirely made of a second electrically conductive material different from the first electrically conductive material, step 102 may comprise determining the Seebeck coefficient of the first electrically conductive material and/or determining the Seebeck coefficient of the second electrically conductive material, respectively.

In step 104, the temperature at the pressing surfaces 14a, 14b, i.e. the temperature of the workpiece 30 corresponding to a situation of thermal equilibrium, is determined based on a voltage measurement corresponding to a thermoelectric current through the first tool member 12a, through the workpiece 30 and through the second tool member 12b, i.e. using the forming tool 10 (and the workpiece 30) as a measuring tool configured as a thermocouple. The voltage measurement may in particular be provided by the voltmeter 20.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

**Claims**

1. A forming tool (10) for forming a workpiece (30) comprising:

   a first tool member (12a) and a second tool member (12b) for forming a workpiece (30) arranged therebetween by pressing against the workpiece (30) with a respective pressing surface (14a, 14b), and
   a temperature monitoring system, the forming tool being **characterized in that** the temperature monitoring system comprises a voltmeter (20) connected between a first electrical contact (16a) of the first tool member (12a) and a second electrical contact (16b) of the second tool member (12b),
   wherein a first electrical path (18a) defined in the first tool member (12a) between the pressing surface (14a) thereof and the first electrical contact (16a) comprises at least a portion of a first electrically conductive material and wherein a second electrical path (18b) defined in the second tool member (12b) between the pressing surface (14b) thereof and the second electrical contact (16b) comprises at least a portion of a second electrically conductive material different from the first electrically conductive material.

2. The forming tool (10) of claim 1, wherein the first electrical contact (16a) is arranged at/on an external surface (13a) of the first tool member (12a) and/or wherein the second electrical contact (16b) is arranged at/on an external surface (13b) of the second tool member (12b).

3. The forming tool (10) of claim 1 or 2, wherein said at least a portion of the first electrical path (18a) is arranged at/on an external surface (13a) of the first tool member (12a) and/or wherein said at least a portion of the second electrical path (18b) is arranged at/on an external surface (13b) of the second tool member (12b).

4. The forming tool (10) of any of the preceding claims, wherein said at least a portion of the first electrical path (18a) is a first coating (15a) coated at/on an external surface of the first tool member (12a) and/or wherein said at least a portion of the second electrical path (18b) is a second coating (15b) coated at/on an external surface of the second tool member (12b).

5. The forming tool (10) of any of the preceding claims, wherein said at least a portion of the first electrical path (18a) is arranged at/on the pressing surface (14a) of the first tool member (12a) and/or said wherein said at least a portion of the second electrical path (18b) is arranged at/on the pressing surface (14b) of the second tool member (12b).

6. The forming tool (10) of any of the preceding claims wherein the first tool member (12a) is made of the first electrically conductive material and/or wherein the second tool member (12b) is made of the second electrically conductive material.

7. The forming tool (10) of any of the preceding claims, comprising a temperature measuring device (40) configured for measuring a temperature at the first electrical contact (16a) and/or at the second electrical contact (16b); and/or
   further comprising a processing unit (50) configured for determining a temperature at the pressing surface (14a) of the first tool member (12a) and/or at the pressing surface (14b) of the second tool member (12b) based on a voltage measurement provided by the voltmeter (20).

8. The forming tool (10) of any of the preceding claims, further comprising one or more heating elements (70) configured for heating the first tool member (12a) and/or the second tool member (12b); and/or further comprising a temperature regulation system (60) configured for setting a temperature of the first tool member (12a) at the first electrical contact (16a) and/or a temperature of the second tool member (12b) at the second electrical contact (16b).

9. The forming tool (10) of any of the preceding claims, further comprising one or more insulating elements (80a, 80b) configured for electrically insulating the first electrical path (18a) and/or the second electrical path (18b) from the rest of the forming tool (10).

10. The forming tool (10) of any of the preceding claims, wherein the forming tool (10) is configured for forming the workpiece (30) by hot forming, cold forming, pressing, stamping, hot stamping, hydroforming or forging.

11. A method of measuring a temperature of a workpiece (30) being formed in a forming tool (10), wherein the workpiece (30) is arranged between a first tool member (12a) of the forming tool (10) and a second tool member (12b) of the forming tool (10) and in thermal and electrical contact with the first tool member (12a) and the second tool member (12b), wherein the temperature of the workpiece (30) is measured based on a voltage measurement corresponding to a voltage thermoelectrically induced between the first tool member (12a) and the second tool member (12b) through the workpiece (30).

12. The method of claim 11, wherein said voltage is associated with a thermoelectric current flowing through each of the first tool member (12a), the workpiece (30) and the second tool member (12b); wherein the thermoelectric current preferably flows through a first electrical path (18a) defined in the first tool member (12a) and through a second electrical path (18b) defined in the second tool member (12b), wherein the first electrical path (18a) preferably has a first Seebeck coefficient and the second electrical path (18b) preferably has a second Seebeck coefficient different from the first Seebeck coefficient.

13. The method of any of claims 11 or 12, further comprising, before the temperature of the workpiece (30) is measured, a calibration process comprising determining a first Seebeck coefficient of the first electrical path (18a) and/or a second Seebeck coefficient of the second electrical path (18b).

14. The method according to any of claims 11 to 13, wherein the workpiece (30) is being formed while heating the workpiece (30) and/or while maintaining the workpiece (30), in particular the entire workpiece (30), at a predefined working temperature, wherein the predefined working temperature preferably is greater than 350°C, more preferably greater than 500°C.

15. The method according to any of claims 11 to 14, wherein the workpiece (30) is being formed by hot forming, cold forming, pressing, stamping, hot stamping, hydroforming or forging.

**Patentansprüche**

1. Formwerkzeug (10) zum Formen eines Werkstücks (30), wobei das Formwerkzeug Folgendes umfasst:

ein erstes Werkzeugelement (12a) und ein zweites Werkzeugelement (12b) zum Formen eines dazwischen angeordneten Werkstücks (30) durch Pressen gegen das Werkstück (30) mit einer jeweiligen Pressfläche (14a, 14b), und ein Temperaturüberwachungssystem, wobei das Formwerkzeug **dadurch gekennzeichnet ist, dass** das Temperaturüberwachungssystem einen Spannungsmesser (20) umfasst, der zwischen einem ersten elektrischen Kontakt (16a) des ersten Werkzeugelements (12a) und einem zweiten elektrischen Kontakt (16b) des zweiten Werkzeugelements (12b) angeschlossen ist, wobei ein erster elektrischer Pfad (18a), der in dem ersten Werkzeugelement (12a) zwischen dessen Pressfläche (14a) und dem ersten elektrischen Kontakt (16a) definiert ist, mindestens einen Abschnitt eines ersten elektrisch leitfähigen Materials umfasst und wobei ein zweiter elektrischer Pfad (18b), der in dem zweiten Werkzeugelement (12b) zwischen dessen Pressfläche (14b) und dem zweiten elektrischen Kontakt (16b) definiert ist, mindestens einen Abschnitt eines zweiten elektrisch leitfähigen Materials umfasst, das sich von dem ersten elektrisch leitfähigen Material unterscheidet.

2. Formwerkzeug (10) nach Anspruch 1, wobei der erste elektrische Kontakt (16a) an/auf einer Außenfläche (13a) des ersten Werkzeugelements (12a) angeordnet ist und/oder wobei der zweite elektrische Kontakt (16b) an/auf einer Außenfläche (13b) des zweiten Werkzeugelements (12b) angeordnet ist.

3. Formwerkzeug (10) nach Anspruch 1 oder 2, wobei der mindestens eine Abschnitt des ersten elektrischen Pfads (18a) an/auf einer Außenfläche (13a) des ersten Werkzeugelements (12a) angeordnet ist und/oder wobei der mindestens eine Abschnitt des zweiten elektrischen Pfads (18b) an/auf einer Außenfläche (13b) des zweiten Werkzeugelements (12b) angeordnet ist.

4. Formwerkzeug (10) nach einem der vorstehenden Ansprüche, wobei der mindestens eine Abschnitt des ersten elektrischen Pfads (18a) eine erste Beschichtung (15a) ist, die an/auf einer Außenfläche des ersten Werkzeugelements (12a) beschichtet ist, und/oder wobei der mindestens eine Abschnitt des zweiten elektrischen Pfads (18b) eine zweite Beschichtung (15b) ist, die an/auf einer Außenfläche des zweiten Werkzeugelements (12b) beschichtet ist.

5. Formwerkzeug (10) nach einem der vorstehenden Ansprüche, wobei der mindestens eine Abschnitt des ersten elektrischen Pfads (18a) an/auf der Pressfläche (14a) des ersten Werkzeugelements (12a) angeordnet ist und/oder wobei der mindestens eine Abschnitt des zweiten elektrischen Pfads (18b) an/auf der Pressfläche (14b) des zweiten Werkzeugelements (12b) angeordnet ist.

6. Formwerkzeug (10) nach einem der vorstehenden Ansprüche, wobei das erste Werkzeugelement (12a) aus dem ersten elektrisch leitfähigen Material hergestellt ist und/oder wobei das zweite Werkzeugelement (12b) aus dem zweiten elektrisch leitfähigen Material hergestellt ist.

7. Formwerkzeug (10) nach einem der vorstehenden Ansprüche, das eine Temperaturmessvorrichtung (40) umfasst, die zum Messen einer Temperatur am ersten elektrischen Kontakt (16a) und/oder am zweiten elektrischen Kontakt (16b) konfiguriert ist; und/oder ferner umfassend eine Prozessoreinheit (50), die zum Bestimmen einer Temperatur an der Pressfläche (14a) des ersten Werkzeugelements (12a) und/oder an der Pressfläche (14b) des zweiten Werkzeugelements (12b) basierend auf einer durch den Spannungsmesser (20) bereitgestellten Spannungsmessung konfiguriert ist.

8. Formwerkzeug (10) nach einem der vorstehenden Ansprüche, ferner umfassend ein oder mehrere Heizelemente (70), die zum Erwärmen des ersten Werkzeugelements (12a) und/oder des zweiten Werkzeugelements (12b) konfiguriert sind; und/oder ferner umfassend ein Temperaturregelungssystem (60), das zum Einstellen einer Temperatur des ersten Werkzeugelements (12a) am ersten elektrischen Kontakt (16a) und/oder einer Temperatur des zweiten Werkzeugelements (12b) am zweiten elektrischen Kontakt (16b) konfiguriert ist.

9. Formwerkzeug (10) nach einem der vorstehenden Ansprüche, ferner umfassend ein oder mehrere Isolierelemente (80a, 80b), die zum elektrischen Isolieren des ersten elektrischen Pfads (18a) und/oder des zweiten elektrischen Pfads (18b) vom Rest des Formwerkzeugs (10) konfiguriert sind.

10. Formwerkzeug (10) nach einem der vorstehenden Ansprüche, wobei das Formwerkzeug (10) zum Formen des Werkstücks (30) durch Warmformen, Kaltformen, Pressen, Prägen, Heißprägen, Hydroformen oder Schmieden konfiguriert ist.

11. Verfahren zum Messen einer Temperatur eines Werkstücks (30), das in einem Formwerkzeug (10) geformt wird, wobei das Werkstück (30) zwischen einem ersten Werkzeugelement (12a) des Formwerkzeugs (10) und einem zweiten Werkzeugelement (12b) des Formwerkzeugs (10) und in thermischem und elektrischem Kontakt mit dem ersten Werkzeugelement (12a) und dem zweiten Werkzeugelement (12b) angeordnet ist, wobei die Temperatur des Werkstücks (30) basierend auf einer Spannungsmessung gemessen wird, die einer zwischen dem ersten Werkzeugelement (12a) und dem zweiten Werkzeugelement (12b) durch das Werkstück (30) thermoelektrisch induzierten Spannung entspricht.

12. Verfahren nach Anspruch 11, wobei die Spannung einem thermoelektrischen Strom zugeordnet ist, der durch jedes des ersten Werkzeugelements (12a), des Werkstücks (30) und des zweiten Werkzeugelements (12b) fließt; wobei der thermoelektrische Strom vorzugsweise durch einen ersten elektrischen Pfad (18a), der in dem ersten Werkzeugelement (12a) definiert ist, und durch einen zweiten elektrischen Pfad (18b), der in dem zweiten Werkzeugelement (12b) definiert ist, fließt, wobei der erste elektrische Pfad (18a) vorzugsweise einen ersten Seebeck-Koeffizienten aufweist und der zweite elektrische Pfad (18b) vorzugsweise einen zweiten Seebeck-Koeffizienten aufweist, der sich von dem ersten Seebeck-Koeffizienten unterscheidet.

13. Verfahren nach einem der Ansprüche 11 oder 12, ferner umfassend, bevor die Temperatur des Werkstücks (30) gemessen wird, einen Kalibrierungsprozess, der das Bestimmen eines ersten Seebeck-Koeffizienten des ersten elektrischen Pfads (18a) und/oder eines zweiten Seebeck-Koeffizienten des zweiten elektrischen Pfads (18b) umfasst.

14. Verfahren nach einem der Ansprüche 11 bis 13, wobei das Werkstück (30) geformt wird, während das Werkstück (30) erwärmt wird und/oder während das Werkstück (30), insbesondere das gesamte Werkstück (30), auf einer vordefinierten Arbeitstemperatur gehalten wird, wobei die vordefinierte Arbeitstemperatur vorzugsweise größer als 350 °C, bevorzugter größer als 500 °C ist.

**15.** Verfahren nach einem der Ansprüche 11 bis 14, wobei das Werkstück (30) durch Warmformen, Kaltformen, Pressen, Prägen, Heißprägen, Hydroformen oder Schmieden geformt wird.

## Revendications

**1.** Outil de formage (10) pour former une pièce à usiner (30) comprenant :

un premier élément d'outil (12a) et un second élément d'outil (12b) pour former une pièce à usiner (30) agencée entre eux par pression contre la pièce à usiner (30) avec une surface de pression respective (14a, 14b), et
un système de surveillance de température, l'outil de formage étant **caractérisé en ce que** le système de surveillance de température comprend un voltmètre (20) connecté entre un premier contact électrique (16a) du premier élément d'outil (12a) et un second contact électrique (16b) du second élément d'outil (12b),
dans lequel un premier chemin électrique (18a) défini dans le premier élément d'outil (12a) entre la surface de pression (14a) de celui-ci et le premier contact électrique (16a) comprend au moins une partie d'un premier matériau électriquement conducteur et dans lequel un second chemin électrique (18b) défini dans le second élément d'outil (12b) entre la surface de pression (14b) de celui-ci et le second contact électrique (16b) comprend au moins une partie d'un second matériau électriquement conducteur différent du premier matériau électriquement conducteur.

**2.** Outil de formage (10) selon la revendication 1, dans lequel le premier contact électrique (16a) est agencé au niveau/sur une surface externe (13a) du premier élément d'outil (12a) et/ou dans lequel le second contact électrique (16b) est agencé au niveau/sur une surface externe (13b) du second élément d'outil (12b).

**3.** Outil de formage (10) selon la revendication 1 ou 2, dans lequel ladite au moins une partie du premier chemin électrique (18a) est agencée au niveau/sur une surface externe (13a) du premier élément d'outil (12a) et/ou dans lequel ladite au moins une partie du second chemin électrique (18b) est agencée au niveau/sur une surface externe (13b) du second élément d'outil (12b).

**4.** Outil de formage (10) selon l'une quelconque des revendications précédentes, dans lequel ladite au moins une partie du premier chemin électrique (18a) est un premier revêtement (15a) revêtu au niveau/sur une surface externe du premier élément d'outil (12a) et/ou dans lequel ladite au moins une partie du second chemin électrique (18b) est un second revêtement (15b) revêtu au niveau/sur une surface externe du second élément d'outil (12b).

**5.** Outil de formage (10) selon l'une quelconque des revendications précédentes, dans lequel ladite au moins une partie du premier chemin électrique (18a) est agencée au niveau/sur la surface de pression (14a) du premier élément d'outil (12a) et/ou dans lequel ladite au moins une partie du second chemin électrique (18b) est agencée au niveau/sur la surface de pression (14b) du second élément d'outil (12b).

**6.** Outil de formage (10) selon l'une quelconque des revendications précédentes, dans lequel le premier élément d'outil (12a) est constitué du premier matériau électriquement conducteur et/ou dans lequel le second élément d'outil (12b) est constitué du second matériau électriquement conducteur.

**7.** Outil de formage (10) selon l'une quelconque des revendications précédentes, comprenant un dispositif de mesure de température (40) configuré pour mesurer une température au niveau du premier contact électrique (16a) et/ou au niveau du second contact électrique (16b) ; et/ou
comprenant en outre une unité de traitement (50) configurée pour déterminer une température au niveau de la surface de pression (14a) du premier élément d'outil (12a) et/ou au niveau de la surface de pression (14b) du second élément d'outil (12b) sur la base d'une mesure de tension fournie par le voltmètre (20).

**8.** Outil de formage (10) selon l'une quelconque des revendications précédentes, comprenant en outre un ou plusieurs éléments chauffants (70) configurés pour chauffer le premier élément d'outil (12a) et/ou le second élément d'outil (12b) ; et/ou
comprenant en outre un système de régulation de température (60) configuré pour régler une température du premier élément d'outil (12a) au niveau du premier contact électrique (16a) et/ou une température du second élément d'outil (12b) au niveau du second contact électrique (16b).

**9.** Outil de formage (10) selon l'une quelconque des revendications précédentes, comprenant en outre un ou plusieurs éléments isolants (80a, 80b) configurés pour isoler électriquement le premier chemin électrique (18a) et/ou le second chemin électrique (18b) du reste de l'outil de formage (10).

**10.** Outil de formage (10) selon l'une quelconque des revendications précédentes, dans lequel l'outil de formage (10) est configuré pour former la pièce à usiner (30) par formage à chaud, formage à froid, pressage, estampage, estampage à chaud, hydroformage ou forgeage.

11. Procédé de mesure d'une température d'une pièce à usiner (30) formée dans un outil de formage (10), dans lequel la pièce à usiner (30) est agencée entre un premier élément d'outil (12a) de l'outil de formage (10) et un second élément d'outil (12b) de l'outil de formage (10) et en contact thermique et électrique avec le premier élément d'outil (12a) et le second élément d'outil (12b),
dans lequel la température de la pièce à usiner (30) est mesurée sur la base d'une mesure de tension correspondant à une tension induite de manière thermoélectrique entre le premier élément d'outil (12a) et le second élément d'outil (12b) à travers la pièce à usiner (30).

12. Procédé selon la revendication 11, dans lequel ladite tension est associée à un courant thermoélectrique circulant à travers chacun du premier élément d'outil (12a), de la pièce à usiner (30) et du second élément d'outil (12b) ;
dans lequel le courant thermoélectrique circule de préférence à travers un premier chemin électrique (18a) défini dans le premier élément d'outil (12a) et à travers un second chemin électrique (18b) défini dans le second élément d'outil (12b), dans lequel le premier chemin électrique (18a) a de préférence un premier coefficient de Seebeck et le second chemin électrique (18b) a de préférence un second coefficient de Seebeck différent du premier coefficient de Seebeck.

13. Procédé selon l'une quelconque des revendications 11 ou 12, comprenant en outre, avant que la température de la pièce à usiner (30) soit mesurée, un processus d'étalonnage comprenant la détermination d'un premier coefficient de Seebeck du premier chemin électrique (18a) et/ou d'un second coefficient de Seebeck du second chemin électrique (18b).

14. Procédé selon l'une quelconque des revendications 11 à 13, dans lequel la pièce à usiner (30) est formée tout en chauffant la pièce à usiner (30) et/ou tout en maintenant la pièce à usiner (30), en particulier la pièce à usiner entière (30), à une température de travail prédéfinie, dans lequel la température de travail prédéfinie est de préférence supérieure à 350 °C, plus préférablement supérieure à 500 °C.

15. Procédé selon l'une quelconque des revendications 11 à 14, dans lequel la pièce à usiner (30) est formée par formage à chaud, formage à froid, pressage, estampage, estampage à chaud, hydroformage ou forgeage.

Fig. 1

Fig. 2

Fig. 3

Fig. 4

Fig. 5

Fig. 6

**EP 4 122 619 B1**

REFERENCES CITED IN THE DESCRIPTION

**Patent documents cited in the description**

- US 8230713 B2

- US 2017182538 A1